**Europäisches Patentamt**

**European Patent Office**

**Office européen des brevets**

(11) Veröffentlichungsnummer: **0 077 777**
**B1**

(12) **EUROPÄISCHE PATENTSCHRIFT**

(45) Veröffentlichungstag der Patentschrift:
29.10.86

(51) Int. Cl.⁴: **F 02 P 5/04**, G 05 B 1/03

(21) Anmeldenummer: **82900349.0**

(22) Anmeldetag: **30.01.82**

(86) Internationale Anmeldenummer:
**PCT/DE 82/00019**

(87) Internationale Veröffentlichungsnummer:
**WO 82/03892 (11.11.82** Gazette 82/27)

(54) **SCHALTUNGSANORDNUNG ZUR EINSTELLUNG VON REFERENZDATEN IN DIGITALEN SYSTEMEN.**

(30) Priorität: 06.05.81 DE 3117871
15.09.81 DE 3136581

(43) Veröffentlichungstag der Anmeldung:
04.05.83 Patentblatt 83/18

(45) Bekanntmachung des Hinweises auf die Patenterteilung:
29.10.86 Patentblatt 86/44

(84) Benannte Vertragsstaaten:
AT CH DE FR GB LI NL SE

(56) Entgegenhaltungen:
DE - A - 1 948 047
FR - A - 2 188 694
FR - A - 2 206 443
FR - A - 2 266 340
FR - A - 2 385 135
US - A - 3 768 451
US - A - 3 989 024

(73) Patentinhaber: ROBERT BOSCH GMBH, Postfach 50,
D-7000 Stuttgart 1 (DE)

(72) Erfinder: CONZELMANN, Gerhard, Wilhelmstrasse 37,
D-7022 Leinfelden-Echterdingen 1 (DE)
Erfinder: FIEDLER, Gerhard, Hohenzollernstrasse 22,
D-7440 Neckarhausen (DE)
Erfinder: FLEISCHER, Ulrich, Büttensülzerweg 16,
D-7401 Pliezhausen (DE)
Erfinder: KALKHOF, Bernd, Am Rosenbach 10,
D-7410 Reutlingen 22 (DE)

(74) Vertreter: Witte, Alexander, Dr.-Ing. et al, c/o Robert
Bosch GmbH Robert-Bosch-Platz 1,
D-7016 Gerlingen-Schillerhöhe (DE)

**Beschreibung**

Stand der Technik

Die Erfindung geht aus von einer Schaltungsanordnung nach der Gattung des Hauptanspruches.

Es sind bereits Schaltungsanordnungen bekannt, in denen interne Wertefolgen, beispielsweise Signale von Gebern mit Referenzdaten verglichen werden, um aus der Koinzidenz der Wertefolge mit den Referenzdaten Schaltsignale für bestimmte Steuer- und Regelfunktionen abzuleiten. So ist beispielsweise in der EP-A1 0 023 283 eine Schaltungsanordnung beschrieben, in der Signale von Gebern eines Kraftfahrzeuges, beispielsweise Drehzahlen oder zurückgelegte Entfernungen, in Vergleichern mit Referenzdaten verglichen werden, die intern oder extern von Kodierschaltern erzeugt werden. Erreichen die Ausgangssignale der Geber die in den Vergleichern vorgegebenen Referenzdaten, werden Schaltsignale erzeugt, die einen wirtschaftlichen und/oder unwirtschaftlichen Betrieb des Kraftfahrzeuges signalisieren.

Des weiteren zeigt die FR-A-2 385 135 eine Schaltungsanordnung zur Einstellung von Referenzdaten in digitalen Systemen, in denen eine digitale Wertefolge mit den Referenzdaten verglichen wird. Dabei wird beim Gegenstand der genannten Schrift die Versorgungsspannung für den Analog-Digital-Wandler gleichzeitig den externen Schaltmitteln zugeführt. Ein genaues und präzises Arbeiten der Komparatoren ist jedoch nur dann möglich, wenn die vom Digital-Analog-Wandler stammende analoge Spannung mit einer Referenzspannung verglichen wird, die in einem festen Verhältnis zu der Referenzspannung des Digital-Analog-Wandlers steht.

Insgesamt haben daher die bekannten Anordnungen der geschilderten Art den Nachteil, dass einerseits die Darstellung der digitalen Referenzdaten, z.B. in einem ROM, relativ aufwendig ist, Probleme bei den elektrischen Verbindungsmitteln mit sich bringt und andererseits die Referenzdaten unabhängig von den auszuwertenden Wertefolgen erzeugt werden, wo sich Störungen, wie Drift und dgl. in erheblichem Ausmass bemerkbar machen können, beispielsweise dann, wenn aufgrund von Temperaturänderungen die auszuwertende Wertefolge und die Referenzdaten sich in unterschiedliche Richtungen verschieben.

Vorteile der Erfindung

Die Aufgabe der Erfindung besteht darin, dass einmal die Referenzdaten mit geringem Aufwand als Analog-Werte dargestellt werden, wodurch sich auch ein geringerer Aufwand bei den elektrischen Verbindungsleitungen ergibt, und dass andererseits eine relative Konstanz von Wertefolge und Referenzdaten erzielt wird, so dass Drifterscheinungen oder dgl. kompensiert werden.

Dies wird dadurch erreicht, dass der Digital-Analog-Wandler eine zur Wandlung benötigte elektrische, von den Schwankungen der Versorgungsspannung unabhängige, analoge Referenzgrösse aufweist, die den externen Schaltmitteln zur Bildung der analogen Referenzdaten zugeführt ist.

Durch die in den Unteransprüchen aufgeführten Massnahmen sind vorteilhafte Weiterbildungen der im Hauptanspruch angegebenen Schaltungsanordnung möglich.

So wird in bevorzugter Ausgestaltung der Erfindung zur Erzeugung der zu vergleichenden Wertefolge und der Referenzdaten eine Referenzspannung verwendet aus der die Referenzdaten in einfacher Weise durch Spannungsteilung erzeugt werden können. In entsprechender Weise können die Referenzdaten durch Stromteilung bei Verwendung eines Referenzstromes ermittelt werden.

Ist die erfindungsgemässe Schaltungsanordnung in Form eines Hybridschaltkreises realisiert, können die zur Vorgabe der Referenzdaten vorgesehenen Schaltmittel, also beispielsweise der Spannungsteiler, in besonders vorteilhafter Weise auf der Substratplatte des Hybridschaltkreises angeordnet werden, wodurch sich eine gleichartige thermische Umgebung von Systembaustein und externen Schaltmitteln ergibt.

In besonders vorteilhafter Weise kann die erfindungsgemässe Schaltungsanordnung zur Ermittlung von Schaltsignalen in digitalen Zündsystemen oder Regelsystemen für Brennkraftmaschinen von Kraftfahrzeugen oder stationären Anlagen verwendet werden. Wird dabei als Zyklus der Zündzyklus der Brennkraftmaschine zugrundegelegt, kann durch Auswertung des Zählerstandes eines mit einem Taktsignal beaufschlagten Zählers in vorteilhafter Weise die minimale Offenzeit für den Zündspulen-Strom, das Überschreiten einer zulässigen Motordrehzahl und/oder die Zeitdauer einer Zündspulen-Stromreduzierung (Ruhestromabschaltung) ermittelt werden.

Weiterhin kann durch die erfindungsgemässe Schaltungsanordnung in vorteilhafter Weise die Dynamik eines digitalen Regelsystems begrenzt werden, um die Schwingneigung dieses Regelsystems zu vermindern.

Weitere Vorteile der Erfindung ergeben sich aus der Beschreibung und der beigefügten Zeichnung.

Zeichnung

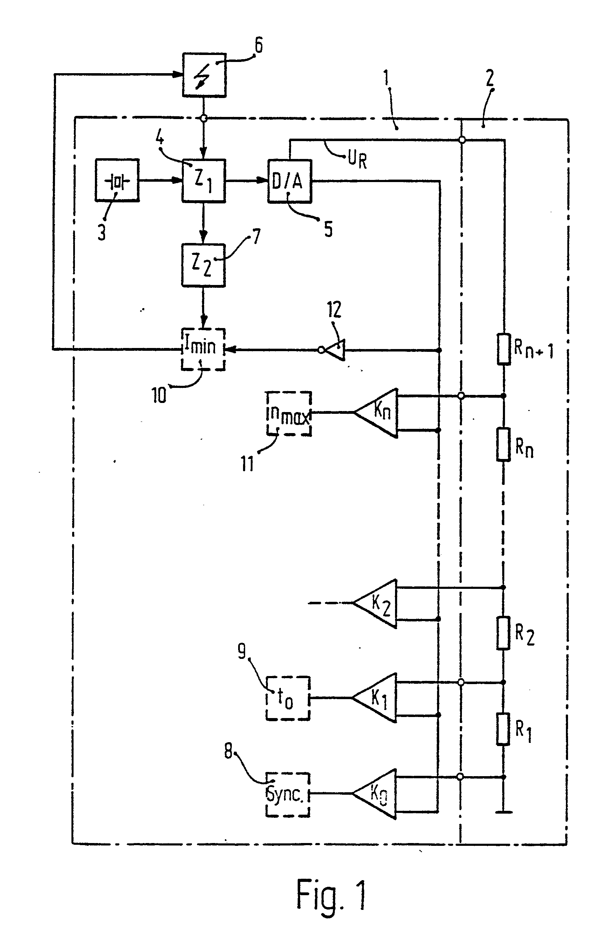

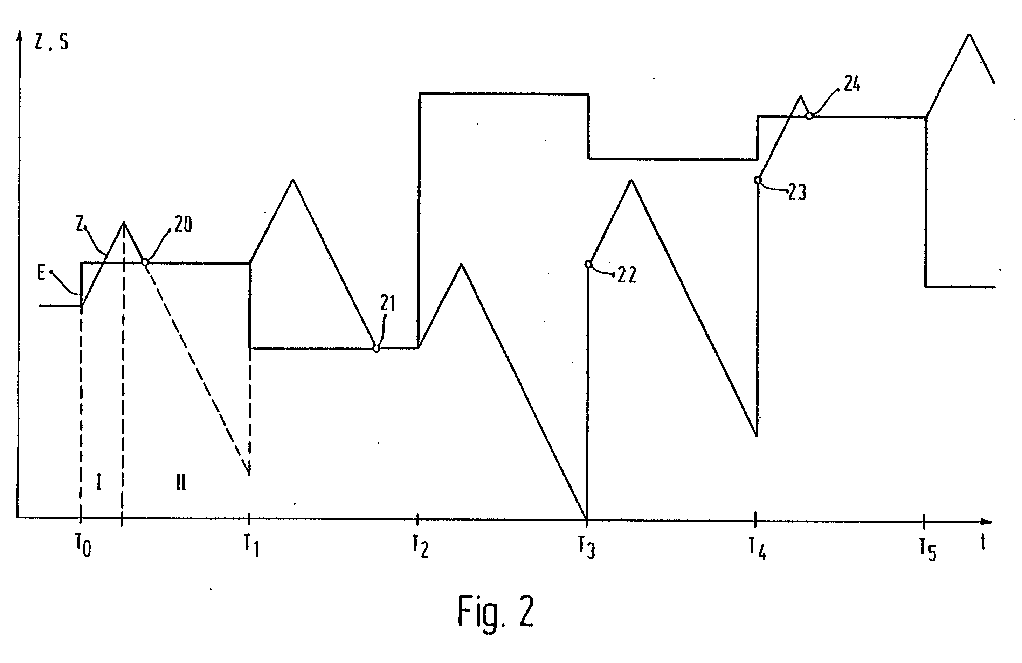

Die Erfindung ist in der Zeichnung dargestellt und in der nachfolgenden Beschreibung näher erläutert. Es zeigen: Figur 1 ein Blockschaltbild einer Ausführungsform einer erfindungsgemässen Schaltungsanordnung; Figur 2 ein Zeitdiagramm von Signalen zur Erläuterung einer Anwendung der erfindungsgemässen Schaltungsanordnung.

Beschreibung des Ausführungsbeispieles

In digitalen Regelsystemen tritt häufig die Aufgabe auf, dass (monoton) veränderliche Wertefolgen, z.B. Zählerstände, mit im Prinzip festen Referenzdaten des Systems verglichen werden müssen, die entweder im System selbst oder in einem zugehörigen Speicher abgelegt sind. Dabei werden abhängig vom Erreichen, Über- oder Unterschreiten dieser Referenzdaten Reaktionen des Systems ausgelöst.

So wird beispielsweise in digitalen Zündsystemen von Kraftfahrzeugen für die Schliesswinkelregelung des Zündspulenstromes ab Zündzeitpunkt eine feste Zeit abgewartet, nach deren Ablauf der Spulen-Strom frühestens wieder eingeschaltet werden darf. Der Ablauf dieser minimalen Offenzeit wird durch Abzählen einer fest gewählten Anzahl voller Perioden eines Taktgenerators kontrolliert. Dieses, durch die vorgegebene Anzahl voller Perioden festliegende Zeitmass ist dabei das Referenzdatum des digitalen Regelsystems. In entsprechender Weise ist eine Drehzahlbegrenzung der Brennkraftmaschine dadurch möglich, dass die Zündung bei Erreichen einer vorgegebenen Maximaldrehzahl abgeschaltet wird. In diesem Fall werden zwischen zwei Zündzeitpunkten die vollen Perioden des Taktgenerators ausgezählt und der Zündspulenstrom dann nicht wieder eingeschaltet, wenn eine vorher festgelegte Anzahl von Perioden nicht erreicht wurde. Das Referenzdatum des digitalen Regelsystems ist dabei wiederum ein Zeitmass, das der minimalen Periodendauer des Zündzyklus entspricht.

Eine ähnliche Aufgabenstellung tritt bei der sogenannten Ruhestromabschaltung auf. Hierunter versteht man die quasikontinuierliche Reduzierung des Zündspulen-Stromes bei bestimmten Betriebszuständen der Brennkraftmaschine, insbesondere das Erreichen tiefster Drehzahlen bzw. den Motorstillstand, in denen der Spulen-Strom funkenfrei abgeschaltet werden muss. Als Referenzdatum dient auch hierbei wieder ein Zeitmass, das die Zeitdauer der Spulenstromreduzierung angibt. Dieses Zeitmass beginnt zu einem Zeitpunkt, an dem die Erkennungskriterien des vorgegebenen Betriebszustandes der Brennkraftmaschine vorliegen.

Schliesslich sind noch digitale Regelsysteme bekannt, die zur Vorgabe einer Dynamikbegrenzung des Regelsystems eine Nachführung der Stellgrösse nur in einer Richtung zulassen, wobei zu Beginn jedes Regelzyklus das Regelsystem zunächst in die andere Richtung um einen vorgegebenen Betrag verstellt wird. Diese Begrenzung der Regelamplitude auf den vorgegebenen Betrag in einer Richtung, bewirkt dabei eine Unterdrückung von Schwingungen, da das System in der einen Richtung immer nur um den vorbestimmten Betrag reagieren kann. Zur Durchführung dieser Regelung ist es erforderlich, zu Beginn jedes Regelzyklus das Regelsystem zunächst um den vorbestimmten Betrag in die eine Richtung zu verstellen. Auch dies kann erfindungsgemäss dadurch bewirkt werden, dass ein Zähler bis zum Erreichen eines Referenzdatums (vorgegebener Betrag) gezählt wird.

Wie aus den vorstehend geschilderten Beispielen ersichtlich, kommt es daher insgesamt darauf an, im Regelsystem eine auszuwertende Wertefolge zur Verfügung zu stellen, die mit Referenzdaten zu vergleichen ist, wobei bei Erreichen dieser Referenzdaten die genannten Systemfunktionen ausgelöst werden.

In Figur 1 ist mit 1 ein Systembaustein eines digitalen Regelsystems bezeichnet, der mit externen Schaltmitteln 2 zusammenwirkt, in dem die Referenzdaten des Systems vorgebbar sind. Die externen Schaltmittel 2 werden dabei erfindungsgemäss in räumlicher Nähe des Systembausteins 1 angeordnet, beispielsweise – sofern der Systembaustein 1 als Hybrid ausgebildet ist – durch Anordnung der Schaltmittel 2 auf der Substratplatte des Hybrides. Es ist jedoch auch möglich, die Schaltmittel 2 auf einer gedruckten Leiterplatte anzuordnen, die in unmittelbarer Nähe des Systembausteins 1 angebracht ist.

Der Systembaustein 1 enthält beim Ausführungsbeispiel gemäss Figur 1 einen Taktgenerator 3, der auf einen ersten Zähler 4, der auf ein Zündsystem 6 synchronisierbar ist, arbeitet. Der Ausgang des Zählers 4 ist an einen Digital/Analog-Wandler 5 angeschlossen, der eine Referenzspannung $U_R$ verwendet. Die Referenzspannung $U_R$ ist weiterhin an einen Spannungsteiler $R_1, R_2, \dots R_n, R_{n+1}$ gelegt, der die externen Schaltmittel 2 bildet, wobei der dargestellte Spannungsteiler selbstverständlich nur als Beispiel zu verstehen ist. Der Ausgang des Wandlers 5 ist mit ersten Eingängen von Komparatoren $K_0, K_1, K_2 \dots K_n$ verbunden, deren weitere Eingänge mit den Abgriffen des Spannungsteilers $R_1, R_2 \dots R_n, R_{n+1}$ in Verbindung stehen. Die Ausgänge der Komparatoren $K_0, K_1, \dots K_n$ führen auf einen Synchronisierer 8 bzw. eine Offenzeit-Stufe 9 bzw. eine Drehzahlüberwachung 11.

Der erste Zähler 4 weist darüber hinaus einen Überlauf-Ausgang auf, der mit einem zweiten Zähler 7 verbunden ist, dessen Ausgang an eine Offenzeit-Stufe 10 angeschlossen ist, deren weiterer Eingang über einen Inverter 12 mit dem Ausgangssignal des Digital-Analog-Wandlers 5 beschaltet ist. Der Ausgang der Offenzeit-Stufe 10 steuert einen Eingang des Zündsystems 6.

Die Wirkungsweise der in Figur 1 dargestellten Anordnung ist wie folgt:

Der Taktgenerator 3 liefert Taktimpulse, die vom ersten Zähler 4 gezählt werden, wobei der Zähler jeweils mit einem zyklischen Synchronpunkt, etwa dem Zündzeitpunkt, bei einem bekannten Zählerstand, beispielsweise Null, gestartet wird und bei Überlauf mit Null beginnend weiterzählt, unabhängig davon, ob weitere Zündzeitpunkte folgen. Die Taktfrequenz und der maximale Zählerstand sind dabei so ausgelegt, dass ein Überlauf des Zählers 4 erst bei sehr niedrigen Drehzahlen der Brennkraftmaschine auftritt. Das jeweilige digitale Ausgangssignal des Zählers 4 wird im Wandler 5 in ein Analogsignal umgewandelt und den ersten Eingängen der Komparatoren $K_0, K_1, K_2, \dots K_n$ zugeführt. Der Wandler 5 arbeitet dabei in der Weise, dass eine analoge Referenzspannung $U_R$ durch eine festgelegte Anzahl n binärer Schaltstufen in $2^n$ Intervalle $a = U_R/2^n$ unterteilt wird, wobei jede Teilsumme $x.a$ (mit $x = 2^n$) aufeinanderfolgender Intervalle einem der $2^n$ voneinander unterscheidbaren und aufeinanderfolgenden Schaltzustände der n Schaltstufen zugeordnet wird. Die Referenzspannung $U_R$ wird da-

bei üblicherweise als absolut konstante Grösse vorgesehen, dies ist jedoch nicht unbedingt erforderlich, weil das Verhältnis $U_R/a = 2^n$ konstant und unabhängig von der Grösse $U_R$ ist, mithin also die Teilbarkeit in $2^n$ Intervalle und die eindeutige Zuordenbarkeit der aufeinanderfolgenden Intervallsummen zu den aufeinanderfolgenden Schaltzuständen der n Schaltstufen auch dann erhalten bleibt, wenn $U_R$ keine absolut konstante Grösse ist. Diese Betrachtung hat Vorteile für die erfindungsgemässe Lösung deswegen, weil die Referenzspannung $U_R$ nicht nur zur Digital/Analog-Wandlung verwendet wird, sondern darüber hinaus zur Ableitung der Referenzdaten in den Schaltmitteln 2. Dann sind als externe Schaltmittel 2 im Gegensatz zu rein digitalen Systemen, die aufwendige und temperaturempfindliche Digitalspeicher (ROM oder EPROM) erfordern, lediglich die Widerstände $R_1$, $R_2$, ... $R_n$, $R_{n+1}$ mit gleichem relativem Temperaturkoeffizienten erforderlich, wie sie einfach und preisgünstig zur Verfügung stehen. Werden diese Widerstände, wie in Figur 1 dargestellt, als Spannungsteiler (Kette) angeordnet, können an den Teilerpunkten die benötigten Referenzdaten in analoger Form abgenommen werden. Die Referenzdaten entstehen demnach, wie auch die digital/analog gewandelte ursprünglich digitale Wertefolge des ersten Zählers 4, mit der sie verglichen werden sollen, durch Unterteilung derselben Referenzspannung $U_R$ und sind damit – wenn die Unterteilung konstant bleibt – in gleicher Weise unabhängig von der absoluten Grösse von $U_R$.

Die so erstellten Referenzdaten können in einfachster Weise durch Widerstandsabgleich eingestellt werden, so dass verschiedene Systemvarianten, die sich durch ihre Referenzdaten unterscheiden, mit nur einem Systembaustein herstellbar sind. Die Vergleichsergebnisse zwischen monotoner Wertefolge des Zählers 4 und den Referenzdaten stehen an den Komparatorausgängen innerhalb des Systembausteins 1 wieder in digitaler Form zur Verfügung und können von den digital arbeitenden Komponenten 8 bis 11 des Systembausteins 2 weiter verarbeitet werden.

Werden ab einem Zündzeitpunkt, der vom Zündsystem 6 an den ersten Zähler 4 signalisiert wird, die Taktimpulse des Taktgenerators 3 im ersten Zähler 4 gezählt, erscheint zunächst bei Überschreiten des Ausgangswertes Null des Wandlers 5 am Ausgang des Komparators $K_0$ ein Signal, da der eine Eingang des Komparators $K_0$ mit Masse verbunden ist. Der Ausgang des Komparators $K_0$ kann daher für den Synchronisierer 8 herangezogen werden, der zum Synchronisieren von Steuergrössen mit dem Zündzeitpunkt verwendet wird. Im Komparator $K_1$ wird ein weiteres Referenzdatum entsprechend dem Spannungsabfall am Widerstand $R_1$ vorgegeben. Dieses Referenzdatum entspricht einem Zeitmass, das beispielsweise gleich der minimalen Offenzeit $t_0$ sein kann. Der Ausgang des Wandlers 5 erreicht dieses Referenzdatum nämlich nach einer vorbestimmten Anzahl von Taktimpulsen des Generators 3, so dass dieses Zeitmass durch Einstellung von $R_1$ in der

gewünschten Grösse eingestellt werden kann. Am Ausgang des Komparators $K_1$ entsteht damit ein Signal, das zur Steuerung der Offenzeit-Stufe 9 herangezogen werden kann.

In entsprechender Weise lässt sich durch den Spannungsabfall an $R_1$ und $R_2$ ein Referenzdatum, entsprechend einem weiteren Zeitmass, für den Komparator $K_2$ herstellen, das für andere Steuerzwecke herangezogen werden kann.

Der Betriebszustand, in dem eine Ruhestromabschaltung in Betracht kommt, wird über den zweiten Zähler 7 erkannt, der die Überläufe des ersten Zählers 4 zählt, so dass durch eine vorgegebene Anzahl von Überläufen eine minimale Drehzahl erkannt werden kann. Der zweite Zähler 7 ist so ausgelegt, dass er dann überläuft, wenn eine vorbestimmte Anzahl von Überläufen des ersten Zählers 4, entsprechend einer bestimmten Minimaldrehzahl, erreicht ist. In diesem Fall wird die Offenzeit-Stufe 10 angesteuert, der über den Inverter 12 die invertierte Treppenfunktion des Ausgangs des Wandlers 5, d.h. eine quasikontinuierlich abnehmende Funktion zugeführt wird. Diese Funktion dient im Zündsystem 6 zum Abregeln des Spulenstromes über die vom Zähler 4 vorgegebene Zeit.

Zur Erkennung des Erreichens einer maximalen Drehzahl ist schliesslich der Komparator $K_n$ vorgesehen, der mit einer Drehzahlüberwachung 11 zusammenwirkt. Die Drehzahlüberwachung 11 wird dann angesteuert, wenn während eines Zündzyklus das Referenzdatum nicht erreicht wurde, das durch die Reihenschaltung der Widerstände $R_1$, $R_2$, ... $R_n$ eingestellt wurde. Dieses Referenzdatum entspricht gleichermassen einem Zeitmass und zwar einer minimalen Periodendauer des Zündzyklus und damit einer maximalen Drehzahl.

Schliesslich kann die erfindungsgemässe Schaltungsanordnung noch zur Einstellung der Dynamik digitaler Regelsysteme, vorzugsweise in Kraftfahrzeugen, verwendet werden, wie dies in Figur 2 veranschaulicht ist.

Dabei ist mit E eine Einflussgrösse und mit Z ein Zählerstand bezeichnet, wobei die digitale Regelung in Zyklen erfolgt, die auf der Zeitachse mit $T_0$, $T_1$, $T_2$, $T_3$, $T_4$ und $T_5$ bezeichnet sind. Jeder Zyklus zerfällt dabei in einen ersten Teilzyklus I und in einen zweiten Teilzyklus II, wie es in Figur 2 im ersten Zyklus $T_0$ bis $T_1$ dargestellt ist.

Das digitale Regelsystem arbeitet dabei in der Weise, dass das Einflusssignal (beispielsweise das Ausgangssignal eines Gebers mit dem Zählerstand Z verglichen und der Zählerstand Z bei Gleichheit mit der Einflussgrösse E als Stellgrösse weitergegeben wird. Dabei wird in jedem Regelzyklus während des ersten Teilzyklus I der Zähler um einen vorbestimmten Betrag aufwärts gezählt und im zweiten Teilzyklus II abwärts gezählt, bis die Einflussgrösse E erreicht wurde, was im ersten Zyklus gemäss Figur 2 im Punkt 20 der Fall ist. Der Zählerstand Z des Punktes 20 wird nun als Stellgrösse weitergegeben. Der Zähler wäre bei Nichterreichen der Einflussgrösse E weiter abwärts gezählt worden, wie dies im zweiten Teil-

zyklus II gestrichelt angedeutet ist. Im darauffolgenden Zyklus zählt der Zähler nun vom erreichten Wert (Punkt 20) wieder den vorbestimmten Betrag aufwärts und alsdann bis zum Erreichen der Einflussgrösse E abwärts, was im zweiten Zyklus gemäss Figur 2 im Punkt 21 der Fall ist. Entsprechend zählt der Zähler im dritten Zyklus wiederum vom Punkt 21 an aufwärts, erreicht jedoch im zweiten Teilzyklus beim Abwärtszählen die Einflussgrösse E nicht, weil sich diese zum Zeitpunkt $T_2$ um mehr als den vorbestimmten Betrag in positive Richtung verändert hat. Der Zähler zählt daher bis zum Ende des dritten Zyklus abwärts und hält am Ende dieses Zyklus den Wert (Punkt 22) fest, der zu Beginn des ersten Teilzyklus des dritten Zyklus erreicht war. Von diesem Wert (Punkt 22) zählt der Zähler nun im nächsten Zyklus zunächst um den vorbestimmten Betrag aufwärts, erreicht jedoch die Einflussgrösse E auch im zweiten Teilzyklus wiederum nicht, so dass in analoger Weise der Punkt 23 am Ende des vierten Zyklus festgehalten wird. Dieses Spiel wiederholt sich im fünften Zyklus, wobei jedoch in diesem Falle während des zweiten Teilzyklus die Einflussgrösse E im Punkt 24 wieder erreicht wird.

Insgesamt wird daher das Regelsystem zu Beginn jedes Zyklus in einem ersten Teilzyklus um einen vorbestimmten positiven Betrag verstellt und der Vergleich mit der Einflussgrösse E findet im zweiten Teilzyklus in negativer Richtung statt. Die Variationsbreite des zweiten Teilzyklus ist dabei so bemessen, dass die Einflussgrösse E, sofern sie sich in negative Richtung verstellt hat, sicher erreicht wird. Demgegenüber wird die Einflussgrösse dann nicht erreicht, wenn sie sich um mehr als den vorgegebenen Betrag in positive Richtung verändert haben sollte. In diesem Falle wird das Regelsystem in jedem Zyklus jeweils nur um den vorgegebenen Betrag in positive Richtung verstellt und zählt dann im darauffolgenden Zyklus von diesem Wert an weiter. Damit wird eine Dynamikbegrenzung in positive Richtung bewirkt, weil pro Zyklus jeweils nur eine begrenzte maximale Änderung in eine Richtung möglich ist. Hierdurch wird jedoch ein Schwingen des Regelsystems sicher vermieden, da beim Schwingen grosse Ausschläge in beide Richtungen auftreten.

Wie man sieht, ist es zur Realisierung des beschriebenen digitalen Regelsystems erforderlich, zu Beginn jedes Regelzyklus das System zunächst um einen vorgegebenen Betrag in eine definierte Richtung zu verstellen. Zur Realisierung dieses ersten Teilzyklus eignet sich jedoch in besonders vorteilhafter Weise die erfindungsgemässe Schaltungsanordnung, wenn der vorgegebene Betrag, um den das Regelsystem im ersten Teilzyklus verstellt wird, durch Vorgabe eines Referenzdatums definiert wird, wie dies zum Ausführungsbeispiel gemäss Figur 1 erläutert wurde. Dann wird während des ersten Teilzyklus I der Zählerstand in einem Komparator mit dem Referenzdatum entsprechend dem vorgegebenen Betrag verglichen und bei Erreichen des Referenzdatums die Zählrichtung umgekehrt, so dass der zweite Teilzyklus mit dem Vergleich der Einflussgrösse E gestartet werden kann.

### Patentansprüche

1. Schaltungsanordnung zur Einstellung von Referenzdaten in digitalen Systemen, in denen eine digitale Wertefolge mit den Referenzdaten verglichen wird, mit einem Systembaustein (1) und externen Schaltmitteln (2) zur Vorgabe der Referenzdaten, wobei der Systembaustein einen Digital-Analog-Wandler (5) aufweist, dem die digitale Wertefolge zuführbar ist und dessen analoger Ausgang auf erste Eingänge wenigstens eines Analog-Komparators ($K_0$, $K_1$, $K_2$, $K_n$) geführt ist, und wobei die Referenzdaten in analoger Form an zweite Eingänge des wenigstens einen Komparators ($K_0$, $K_1$, $K_2$, $K_n$) gelegt werden, dadurch gekennzeichnet, dass der Digital-Analog-Wandler (5) eine zur Wandlung benötigte elektrische, von den Schwankungen der Versorgungsspannung unabhängige, analoge Referenzgrösse aufweist, die den externen Schaltmitteln zur Bildung der analogen Referenzdaten zugeführt ist.

2. Schaltungsanordnung nach Anspruch 1, dadurch gekennzeichnet, dass die Referenzgrösse eine Referenzspannung ($U_R$) ist und die Schaltmittel (2) aus wenigstens einem Spannungsteiler ($R_1$, $R_2$, $R_n$, $R_{n+1}$) bestehen.

3. Schaltungsanordnung nach Anspruch 1, dadurch gekennzeichnet, dass die Referenzgrösse ein Referenzstrom ist und die Schaltmittel (2) aus wenigstens einem Stromteiler bestehen.

4. Schaltungsanordnung nach einem der vorhergehenden Ansprüche, dadurch gekennzeichnet, dass die Schaltmittel (2) auf der Substratplatte eines Hybridschaltkreises angeordnet sind.

5. Schaltungsanordnung nach einem der Ansprüche 1 bis 3, dadurch gekennzeichnet, dass die Schaltmittel (2) auf einer gedruckten Leiterplatte angeordnet sind.

6. Schaltungsanordnung nach einem der vorhergehenden Ansprüche, dadurch gekennzeichnet, dass der Systembaustein (1) Teil eines Zündsystems einer Brennkraftmaschine ist, wobei ein mit einem Synchronzeitpunkt im Zündzyklus, vorzugsweise dem Zündzeitpunkt synchronisierter, periodisch zählender erster Zähler (4), dem ein Taktsignal zugeführt wird, an den Digital/Analog-Wandler (5) angeschlossen ist und wenigstens einer der folgenden Werte aus dem Umschalten der Komparatoren ($K_0$, $K_1$, $K_2$, $K_n$) ermittelt wird:

a) die minimale Offenzeit für den Zündspulen-Strom aus dem Erreichen eines ersten Referenzdatums ab dem Synchronzeitpunkt

b) das Überschreiten einer zulässigen Motordrehzahl aus dem Nichterreichen eines zweiten Referenzdatums ab dem Synchronzeitpunkt bis zum darauffolgenden Synchronzeitpunkt.

7. Schaltungsanordnung nach Anspruch 7, dadurch gekennzeichnet, dass bei einer vorbestimmten Anzahl von Überläufen des Zählers (4) das invertierte Ausgangssignal des Wandlers (5) zum kontinuierlichen Abregeln des Stromes der Zündspule herangezogen wird.

## Claims

1. Circuit arrangement for setting reference data in digital systems, in which a digital sequence of values is compared with the reference data, with a system module (1) and external switching means (2) for predetermining the reference data, the system module having a digital/analog converter (5), to which the digital sequence of values can be supplied and the analog output of which is connected to first inputs of at least one analog comparator ($K_0$, $K_1$, $K_2$, $K_n$), and the reference data being applied in analog form to second inputs of the at least one comparator ($K_0$, $K_1$, $K_2$, $K_n$), characterized in that the digital/analog converter (5) has an electrical analog reference variable required for conversion, which is independent of the fluctuations in the supply voltage and which is supplied to the external switching means for forming the analog reference data.

2. Circuit arrangement according to Claim 1, characterized in that the reference variable is a reference voltage ($U_R$) and the switching means (2) consist of at least one voltage divider ($R_1$, $R_2$, $R_n$, $R_{n+1}$).

3. Circuit arrangement according to Claim 1, characterized in that the reference variable is a reference current and the switching means (2) consist of at least one current divider.

4. Circuit arrangement according to one of the preceding claims, characterized in that the switching means (2) are arranged on the substrate board of a hybrid circuit.

5. Circuit arrangement according to one of Claims 1 to 3, characterized in that the switching means (2) are arranged on a printed circuit board.

6. Circuit arrangement according to one of the preceding claims, characterized in that the system module (1) is part of an ignition system of an internal combustion engine, the digital/analog converter (5) having connected to it a periodically counting first counter (4), which is synchronized with a synchronizing time in the ignition cycle, preferably the ignition point, and to which a clock signal is supplied, and at least one of the following values being determined from the switching of the comparators ($K_0$, $K_1$, $K_2$, $K_n$):

a) the minimum open time for the injection coil current from the reaching of a first reference datum as from the synchronizing time

b) the exceeding of a permissible engine speed from the failure to reach a second reference datum as from the synchronizing time.

7. Circuit arrangement according to Claim 7, characterized in that, at a predetermined number of overflows of the counter (4), the inverted output signal of the converter (5) is used for continuously cutting back the current of the ignition coil.

## Revendications

1. Circuit pour introduire des données de référence dans des systèmes numériques dans lesquels on compare une suite de valeurs numériques avec les données de référence, comportant un module de système (1) et des éléments extérieurs de commutation logique (2) pour définir les données de référence, étant précisé que le module du système présente un transducteur numérique/analogique (5) auquel on peut amener la suite de valeurs numériques et dont le signal de sortie analogique est amené aux premières entrées d'au moins un comparateur analogique ($K_0$, $K_1$, $K_2$, $K_n$), et étant précisé que l'on place les données de référence, sous forme analogique, aux deux entrées d'au moins un comparateur ($K_0$, $K_1$, $K_2$, $K_n$), caractérisé en ce que le transducteur numérique/analogique (5) présente une grandeur de référence analogique, électrique, nécessaire pour la conversion, indépendante des variations de la tension d'alimentation et que l'on amène aux éléments extérieurs de commutation logique pour former les données analogiques de référence.

2. Circuit selon la revendication 1, caractérisé en ce que la grandeur de référence est une tension de référence ($U_R$) et en ce que les éléments de commutation logique (2) sont constitués d'au moins un diviseur de tension ($R_1$, $R_2$, $R_n$, $R_{n+1}$).

3. Circuit selon la revendication 1, caractérisé en ce que la grandeur de référence est une intensité de référence; et en ce que les éléments de commutation logique (2) sont constitués d'au moins un diviseur d'intensité.

4. Circuit selon l'une des revendications précédentes, caractérisé en ce que les éléments de commutation logique (2) sont disposés sur la plaquette de substrat d'un circuit hybride.

5. Circuit selon l'une des revendications 1 à 3, caractérisé en ce que les éléments de commutation logique (2) sont disposés sur une plaquette de circuit imprimé.

6. Circuit selon l'une des revendications précédentes, caractérisé en ce que le module du système (1) fait partie d'un système d'allumage d'un moteur à combustion interne, étant précisé qu'un premier compteur (4), qui compte périodiquement, qui est synchronisé avec un instant synchrone du cycle d'allumage, de préférence avec l'instant d'allumage et auquel on amène un signal de cadence est relié au transducteur numérique/analogique (5); et que, par commutation du comparateur ($K_0$, $K_1$, $K_2$, $K_n$), on obtient au moins l'une des valeurs suivantes:

a) la durée minimale d'ouverture pour l'intensité des bobines d'allumage du fait que l'on a atteint une première donnée de référence à partir de l'instant synchrone.

b) La connaissance du fait que l'on a dépassé une vitesse de rotation autorisée du moteur, du fait que l'on n'a pas atteint une seconde donnée de référence à partir de l'instant synchrone et jusqu'à l'instant synchrone suivant.

7. Circuit selon la revendication 7, caractérisé en ce qu'en présence d'un nombre prédéterminé de dépassements du compteur (4), c'est l'opposé du signal de sortie du transducteur (5) que l'on utilise pour réguler en continu l'intensité de la bobine d'allumage.

Fig. 1

Fig. 2